# EUROPÄISCHE PATENTSCHRIFT

(11) **EP 2 198 686 B1**
(45) Veröffentlichungstag und Bekanntmachung des Hinweises auf die Patenterteilung: **12.01.2011**
(21) Anmeldenummer: 09014925.3
(22) Anmeldetag: 02.12.2009
(51) Int. Cl.: A01D 34/73, A01F 29/09

(54) **Arbeitsgerät**
Work device
Appareil de travail

(30) Priorität: 19.12.2008 DE 102008064068
(43) Veröffentlichungstag der Anmeldung: 23.06.2010
(73) Patentinhaber: Andreas Stihl AG & Co. KG, 71336 Waiblingen (DE)
(72) Erfinder: Elfner, Jörg, 71336 Waiblingen (DE); Hanfland, Dennis, 59872 Meschede (DE); Hanak, Richard, 6341 Ebbs (AT); Duregger, Georg, 6342 Niederndorf (AT); Pendl, Stefan, 6300 Angath (AT); Sattler, Ägydius, 6330 Kufstein (AT); Buchauer, Siegfried, 6330 Schwoich (AT); Aschaber, Harald, 6363 Westendorf (AT); Zimmermann, Sven, 6323 Bad Häring (AT)
(74) Vertreter: Wasmuth, Rolf

(56) Entgegenhaltungen:
- EP-A1- 0 486 459
- EP-A1- 1 358 786
- EP-A1- 1 891 851
- DE-A1- 10 036 552
- US-A- 5 036 654
- US-A- 6 119 350
- US-A1- 2008 010 836

## Beschreibung

Die Erfindung betrifft ein Arbeitsgerät der im Oberbegriff des Anspruchs 1 angegebenen Gattung.

Aus der US 4,712,364 ist ein Arbeitsgerät, nämlich ein Rasenmäher bekannt, der mehrere jeweils an einer Haltevorrichtung lösbar festgelegte Messer aufweist. Die Messer besitzen schlüssellochartig geformte Öffnungen, wobei eine der Öffnungen so geformt ist, dass das Messer zum Lösen seitlich bewegt werden muss.

Aus der EP 1 891 851 A1 ist eine Messerhaltevorrichtung für ein von einem Traktor gezogenes Mähwerk bekannt. Das Mähwerk umfasst mehrere Halteplatten, die um ihre Mittelachse rotierend angetrieben sind. Am Außenumfang der Halteplatten sind jeweils zwei Messer festgelegt, die an einem Bolzen eingehängt und über ein Federblech fixiert sind. Zur Sicherung des Federblechs sind Klinken vorgesehen, die im Betrieb aufgrund der Fliehkräfte in ihre Fixierstellung gedrückt werden. Die Messer sind radial beabstandet zur Antriebsachse angeordnet und werden im Betrieb deshalb von den Fliehkräften radial nach außen gedrückt.

Der Erfindung liegt die Aufgabe zugrunde, ein Arbeitsgerät der gattungsgemäßen Art zu schaffen, dessen Werkzeug einfach und sicher an der Haltevorrichtung zu fixieren und von dieser zu lösen ist.

Diese Aufgabe wird durch ein Arbeitsgerät mit den Merkmalen des Anspruchs 1 gelöst.

Die Fixierung des Bauteils aufgrund von Fliehkräften ermöglicht eine einfache Gestaltung des Bauteils und der Haltevorrichtung. Das Bauteil kann dabei ein oder mehrere Elemente umfassen, also auch eine Baugruppe sein. Das Bauteil ist insbesondere ein Werkzeug des Arbeitsgeräts. Dadurch, dass die im Betrieb entstehenden Fliehkräfte zur Fixierung des Bauteils genutzt werden, ist sichergestellt, dass das Bauteil im Betrieb, also bei Rotation um die Drehachse, sicher an der Haltevorrichtung gehalten ist und ein Lösen nur möglich ist, wenn die äußeren Kräfte zum Lösen des Bauteils größer als die wirkenden Fliehkräfte sind, also insbesondere beim Stillstand des Bauteils , wenn die Fliehkräfte nicht wirken. Ein versehentliches Lösen des Bauteils im Betrieb, also bei Rotation, kann so vermieden werden.

Die Drehachse verläuft etwa durch die Mitte des Bauteils. Die Mitte des Bauteils kennzeichnet dabei die geometrische Mitte. Die Drehachse schneidet dabei vorteilhaft das Bauteil. Das Bauteil ist zweckmäßig durch mindestens ein Halteelement an der Haltevorrichtung gehalten, das mit einem zugeordneten Gegenelement zusammenwirkt.

Eine einfache Gestaltung ergibt sich, wenn das Halteelement in eine zugeordnete Öffnung ragt. Vorteilhaft weist die Öffnung eine Eintrittsöffnung und einen Schlitz auf, wobei das Halteelement den Schlitz in montiertem Zustand des Bauteils hintergreift. Neben dem Halteelement und der Öffnung werden keine weiteren Mittel zur Fixierung des Bauteils benötigt, so dass sich eine einfache Gestaltung ergibt. Um einen sicheren, spielfreien Sitz des Bauteils an der Haltevorrichtung zu erreichen, ist vorgesehen, dass das Halteelement ein Haltebolzen ist, der eine schräg zu seiner Längsmittelachse verlaufende Wand besitzt, die in montiertem Zustand des Bauteils hinter einer entsprechend geneigten Wand des Schlitzes liegt. Aufgrund der Neigung der beiden Wände zueinander wird eine Keilwirkung erzielt, die einen spielfreien Sitz des Bauteils an der Haltevorrichtung sicherstellt. Es kann auch vorgesehen sein, dass jeweils zwei gegenseitig geneigte Wände von Haltebolzen und Schlitz zusammenwirken.

Eine einfache Gestaltung ergibt sich, wenn das Bauteil durch mindestens einen Haken an der Haltevorrichtung gehalten ist. Der Haken kann aus dem Material des Bauteils ausgestanzt und umgebogen werden, so dass keine zusätzlichen Bauelemente benötigt werden. Es ergibt sich eine einfache Gestaltung. Der Haken wirkt vorteilhaft als radialer Anschlag.

Vorteilhaft ist das Bauteil im Betrieb aufgrund von Fliehkräften in einer Verriegelungsposition an der Haltevorrichtung gehalten. Die Fliehkräfte wirken demnach auf das Bauteil selbst und halten dieses in der Verriegelungsposition. Vorteilhaft weist das Bauteil bezogen auf die Drehachse eine definierte Unwucht auf und ist im Betrieb durch Radialkräfte an der Haltevorrichtung gehalten, die durch die Unwucht hervorgerufen werden. Die Unwucht wird dadurch erzeugt, dass der Schwerpunkt des Bauteils zur Drehachse einen Abstand aufweist. Der Schwerpunkt des Bauteils wirkt dabei in Richtung auf die Verriegelungsposition des Bauteils und drückt das Bauteil zusätzlich in die Verriegelungsposition. Ein unbeabsichtigtes Lösen des Bauteils ist aufgrund der in entgegengesetzter Richtung wirkenden Unwucht vermieden. Die Unwucht kann an dem Bauteil selbst, insbesondere einteilig mit dem Bauteil ausgebildet sein, so dass keine zusätzlichen Bauelemente zur Fixierung des Bauteils benötigt werden.

Um die durch das Bauteil an der Antriebswelle hervorgerufene Unwucht auszugleichen, ist vorgesehen, dass die antriebsseitige Haltevorrichtung eine Unwucht aufweist, die der Unwucht des Bauteils entgegengerichtet ist und die insbesondere gleich groß ist. Die beiden statischen Unwuchten gleichen sich dadurch aus, so dass insgesamt ein gewuchtetes System entsteht. Je nach Anordnung der Unwuchten kann eine dynamische Unwucht bestehen bleiben.

Vorteilhaft weist das Arbeitsgerät Mittel auf, die eine Drehung des Bauteils verhindern, wenn sich das Bauteil in einer von der Verriegelungsposition abweichenden Stellung befindet. Bei nicht vollständig oder nicht richtig montiertem Bauteil ist dadurch der Betrieb des Arbeitsgeräts nicht möglich. Nur wenn das Bauteil korrekt in der Verriegelungsposition angeordnet ist, kann das Arbeitsgerät in Betrieb genommen und die Haltevorrichtung mit dem Bauteil in Rotation versetzt werden. Dies kann dadurch erfolgen, dass das Bauteil selbst eine Drehbewegung der Haltevorrichtung blockiert oder beispielsweise auch dadurch, dass andere Teile, beispielsweise ein an dem Bauteil anzuordnender Deckel, nicht montiert und dadurch das Arbeitsgerät nicht in Betrieb genommen werden kann.

Um ein unbeabsichtigtes Lösen des Bauteils im Betrieb sicher zu vermeiden, ist vorgesehen, dass das Arbeitsgerät einen drehfest angeordneten Rand aufweist. Der Rand verläuft dabei vorteilhaft koaxial zur Drehachse des Bauteils. Vorteilhaft weist der Rand mindestens eine Durchbrechung auf, die in einer vorgegebenen Position der Haltevorrichtung ein Lösen des Bauteils von der Haltevorrichtung in einer radialen Richtung zur Drehachse erlaubt. Dadurch ist sichergestellt, dass das Bauteil nur in einer vorgegebenen Richtung von der Haltevorrichtung gelöst werden kann. Auch hierdurch kann ein unbeabsichtigtes Lösen des Bauteils von der Haltevorrichtung, insbesondere auch beim Stillstand der Antriebswelle, verhindert werden. Vorteilhaft ist an der Durchbrechung mindestens ein Sicherungsmittel angeordnet, das die Durchbrechung in unbetätigtem Zustand für das Bauteil blockiert. Dadurch, dass das Bauteil im Betrieb aufgrund der Fliehkräfte in die Verriegelungsposition gedrückt wird, muss das Sicherungsmittel im Betrieb keine Haltekräfte aufbringen. Dadurch kann das Sicherungsmittel einfach ausgebildet sein. Das Sicherungsmittel kann insbesondere im Stillstand der Haltevorrichtung ein unbeabsichtigtes Lösen des Bauteils sicher verhindern.

Vorteilhaft ist das Bauteil mindestens teilweise von einer Schutzhaube abgedeckt, die einen Auswurfkanal für Schnittgut aufweist. Um sicherzustellen, dass das Bauteil nur in eine Richtung von der Haltevorrichtung gelöst werden kann, ist vorgesehen, dass der radiale Abstand des Bauteils zur Schutzhaube nur im Bereich des Auswurfkanals größer als der zum Lösen des Bauteils benötigte radiale Weg ist. Dadurch kann das Bauteil nur in Richtung auf den Auswurfkanal von der Haltevorrichtung entfernt werden. In alle anderen Richtungen wird eine seitliche Bewegung des Bauteils von der Schutzhaube begrenzt, bevor das Bauteil freigegeben ist. Die Begrenzung der radialen Bewegung kann auch durch andere Elemente erfolgen.

Um eine zusätzliche Sicherung des Bauteils zu erreichen, ist vorgesehen, dass das Bauteil in Verriegelungsposition durch Sicherungsmittel gesichert ist. Vorteilhaft umfassen die Sicherungsmittel eine Feder, die das Bauteil in seine Verriegelungsposition drückt. Es kann auch vorgesehen sein, dass die Sicherungsmittel mindestens einen Halteriegel umfassen, der eine radiale Bewegung des Bauteils, die zum Lösen des Bauteils führen könnte, verhindert. Insbesondere umfassen die Sicherungsmittel Rastmittel, mit denen das Bauteil in der Verriegelungsposition an der Haltevorrichtung verrastet ist. Dabei können auch mehrere Sicherungsmittel vorgesehen sein, die auch unterschiedlich gestaltet sein können.

Zur Fixierung des Bauteils an der Haltevorrichtung kann auch vorgesehen sein, dass die Haltevorrichtung mindestens ein Verriegelungsmittel aufweist, das das Werkzeug im Betrieb aufgrund von Fliehkräften an der Haltevorrichtung fixiert. Dadurch, dass mindestens ein separates Verriegelungsmittel vorgesehen ist, kann das Bauteil selbst um seine Drehachse ausgewuchtet sein. Auch die Haltevorrichtung kann dadurch ausgewuchtet sein. Dadurch, dass die Verriegelungsmittel aufgrund von Fliehkräften eine Fixierung erreichen, kann sichergestellt werden, dass das Bauteil im Betrieb sicher an der Haltevorrichtung gehalten ist.

Vorteilhaft ist ein Verriegelungsmittel eine schwenkbar an der Haltevorrichtung gelagerte Fliehkraftklinke, die zwischen einer Verriegelungsstellung und einer Freigabestellung verschwenkbar ist. Die Fliehkraftklinke ist dabei im Betrieb insbesondere aufgrund der Fliehkraft in der Verriegelungsstellung gehalten. Vorteilhaft ist die Fliehkraftklinke in Richtung auf ihre Verriegelungsstellung gefedert. Dadurch kann sichergestellt werden, dass das Bauteil auch beim Stillstand der Haltevorrichtung sicher an der Haltevorrichtung gehalten ist. Dadurch, dass die Federung nur zum Halten des Bauteils im Stillstand dient, werden nur geringe Federkräfte benötigt. Die Haltekräfte zur Fixierung des Bauteils werden im Betrieb aufgrund der Fliehkraft erzeugt.

Um sicherzustellen, dass die Haltevorrichtung nicht rotiert, wenn das Bauteil nicht sicher an der Haltevorrichtung fixiert ist, ist vorgesehen, dass das Arbeitsgerät Mittel aufweist, die eine Drehung der Haltevorrichtung blockieren, wenn die Fliehkraftklinke nicht in der Verriegelungsstellung angeordnet ist.

Um ein einfaches Lösen und Fixieren des Bauteils an der Haltevorrichtung zu ermöglichen, ist vorgesehen, dass die Fliehkraftklinke einen Entriegelungsabschnitt zum Verschwenken der Fliehkraftklinke aus der Verriegelungsstellung in die Freigabestellung aufweist. Dabei ist vorgesehen, dass der Entriegelungsabschnitt nur in einer vorgegebenen Position der Haltevorrichtung betätigt werden kann. Dadurch, dass die Betätigung nur in einer vorgegebenen Position möglich ist, kann ein unbeabsichtigtes Betätigen des Entriegelungsabschnitts weitgehend vermieden werden.

Um das Lösen des Bauteils zu vereinfachen, ist vorgesehen, dass die Haltevorrichtung mindestens eine Feder aufweist, die das Bauteil in Freigabestellung von der Haltevorrichtung löst. Zum Lösen des Bauteils muss der Bediener lediglich den Entriegelungsabschnitt betätigen. Dadurch wird die Fliehkraftklinke in ihre Freigabestellung verschwenkt und das Bauteil wird durch die Feder von der Haltevorrichtung gelöst. Dadurch wird eine einfache Bedienung erreicht. Um das Fixieren des Bauteils zu vereinfachen, ist vorgesehen, dass die Feder die Fliehkraftklinke bei nicht montiertem Bauteil in der Freigabestellung hält. Dadurch muss der Bediener zum Fixieren des Bauteils den Entriegelungsabschnitt nicht drücken, sondern lediglich das Bauteil an der Haltevorrichtung anordnen. Dabei wird vorteilhaft die Feder von dem Bauteil betätigt, so dass die Fliehkraftklinke aufgrund ihrer Federung in die Verriegelungsstellung verschwenkt. Dadurch kann das Bauteil auf einfache Weise an der Haltevorrichtung fixiert werden. Dadurch, dass die Fliehkraftklinke bei nicht montiertem Bauteil in der Freigabestellung steht, ist auch ein Drehen der Haltevorrichtung vermieden, wenn das Arbeitsgerät Mittel aufweist, die eine Drehung der Haltevorrichtung bei nicht in der Verriegelungsstellung angeordneter Fliehkraftklinke blockieren.

Eine einfache Gestaltung ergibt sich, wenn das Bauteil mindestens einen Haltebolzen aufweist, der in eine Öffnung der Fliehkraftklinke ragt, wobei die Feder am Boden der Öffnung angeordnet und bei montiertem Bauteil von dem Haltebolzen betätigt ist.

Vorteilhaft ist das Bauteil ein Werkzeug, insbesondere ein Messer, das mindestens zwei Schneiden aufweist. Das Messer ist dabei vorteilhaft einteilig ausgebildet, auch ein mehrteiliger Aufbau des Messers kann jedoch vorteilhaft sein. Das Messer kann beispielsweise einen Messerträger umfassen, an dem mehrere Messerplatten mit Schneiden festgelegt sind.

Ausführungsbeispiele der Erfindung werden im Folgenden anhand der Zeichnung erläutert. Es zeigen:
- Fig. 1: eine schematische Seitendarstellung eines Rasen- mähers,
- Fig. 2: eine schematische Darstellung der Messeraufnahme mit dem Messer des Rasenmähers aus Fig. 1,
- Fig. 3: eine perspektivische Darstellung des Messers mit der Messeraufnahme,
- Fig. 4: eine perspektivische Darstellung des Messers,
- Fig. 5: eine perspektivische Darstellung des Messers mit einem Teil der Haltevorrichtung,
- Fig. 6: eine perspektivische Darstellung des Messers mit der Haltevorrichtung und einer Schutzabdeckung des Rasenmähers,
- Fig. 7: eine perspektivische Darstellung von Messer- aufnahme und Abdeckung,
- Fig. 8: eine Ansicht von unten auf den Rasenmäher,
- Fig. 9: eine schematische perspektivische Darstellung eines Ausführungsbeispiels eines Messers,
- Fig. 10: eine perspektivische Darstellung des Messers aus Fig. 9 an der Haltevorrichtung,
- Fig. 11: eine schematische Schnittdarstellung eines Aus- führungsbeispiels eines Messers an einer Halte- vorrichtung,
- Fig. 12: eine perspektivische Darstellung der Halte- vorrichtung aus Fig. 11,
- Fig. 13: eine geschnittene, perspektivische Darstellung eines Ausführungsbeispiels einer Halte- vorrichtung in verriegelter Stellung,
- Fig. 14: eine Ansicht von unten auf das Messer und die Haltevorrichtung aus Fig. 13,
- Fig. 15: eine Schnittdarstellung durch die Halte- vorrichtung aus Fig. 13,
- Fig. 16: eine schematische Darstellung der Halte- vorrichtung aus Fig. 13 in einer entriegelten Stellung der Haltevorrichtung,
- Fig. 17: einen Schnitt durch die Haltevorrichtung aus Fig. 16,
- Fig. 18: eine Ansicht von unten auf das Messer und die Haltevorrichtung aus Fig. 16 in Ausbauposition,
- Fig. 19: einen Schnitt entlang der Linie XIX - XIX in Fig. 17 bei entriegeltem Messer,
- Fig. 20: die Schnittdarstellung aus Fig. 19 bei teilweise gelöstem Messer,
- Fig. 21: einen Ausschnitt einer Schnittdarstellung durch einen Häcksler,
- Fig. 22: eine perspektivische Schnittdarstellung des Häckslers aus Fig. 21,
- Fig. 23 und 24: perspektivische Darstellungen von Messeraufnahme und Messerscheibe des Häckslers,
- Fig. 25: einen Schnitt durch Messerscheibe und Messer- aufnahme des Häckslers,
- Fig. 26: eine perspektivische Schnittdarstellung durch Messerscheibe und Messeraufnahme,
- Fig. 27: eine perspektivische Darstellung von Messer- scheibe und Messeraufnahme,
- Fig. 28: eine Draufsicht auf den Häcksler bei ab- genommener Schutzhaube mit der Messerscheibe in Ausbauposition,
- Fig. 29: die Draufsicht aus Fig. 28 mit der Messerscheibe in Verriegelungsposition,
- Fig. 30: eine Schnittdarstellung der Messerkammer des Häckslers mit der Messerscheibe in Ausbau- position,
- Fig. 31: perspektivische Darstellung der Schnitt- darstellung aus Fig. 30.

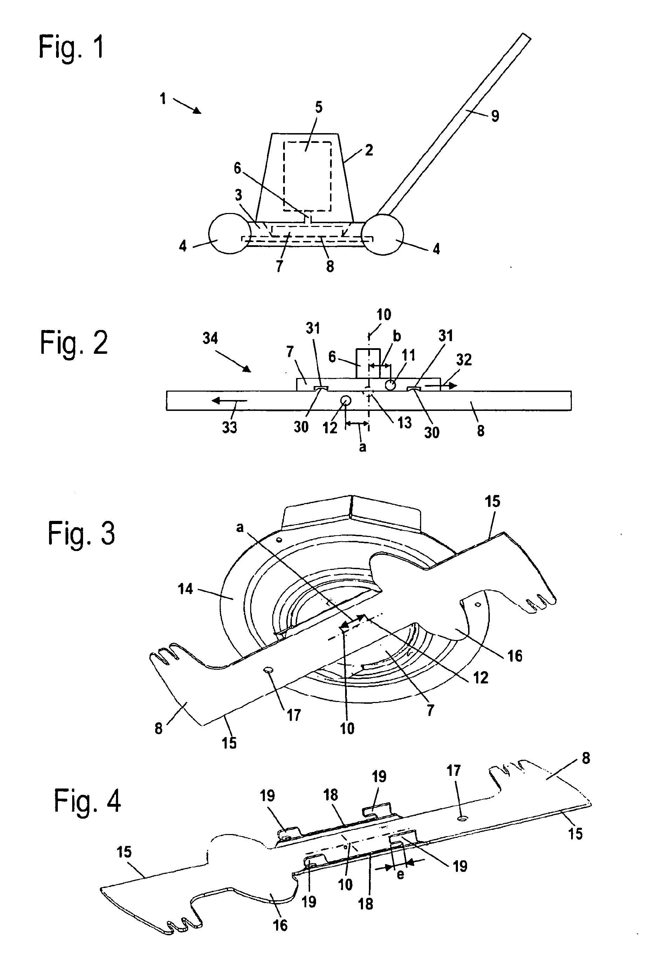

Der in Fig. 1 gezeigte Rasenmäher 1 ist als Beispiel für ein handgeführtes Arbeitsgerät gezeigt. Die Erfindung kann auch bei anderen Arbeitsgeräten wie beispielsweise Häckslern, Blasgeräten oder dgl. zum Einsatz kommen. Beim Einsatz an einem Blasgerät ist das rotierend angetriebene Bauteil vorteilhaft das Gebläserad zur Förderung von Arbeitsluft. Der Rasenmäher 1 besitzt ein Gehäuse 2, das eine Schutzhaube 3 umfasst. An der Schutzhaube 3 sind insgesamt vier Räder 4 festgelegt, mit denen der Rasenmäher 1 über den Boden geschoben werden kann. Zur Bedienung des Rasenmähers 1 ist an der Schutzhaube 3 ein Führungsrahmen 9 festgelegt, an dem nicht gezeigte Handgriffe ausgebildet sind. Im Gehäuse 2 ist ein Antriebsmotor 5 angeordnet, der eine Antriebswelle 6 rotierend antreibt. An der Antriebswelle 6 ist eine Messeraufnahme 7 drehfest fixiert. An der Messeraufnahme 7 ist ein Messer 8 lösbar gehalten.

Wie Fig. 2 zeigt, sind die Antriebswelle 6, die Messeraufnahme 7 und das Messer 8 um eine Drehachse 10 rotierend angetrieben.

Das Messer 8 besitzt einen Schwerpunkt 12, der zur Drehachse 10 einen Abstand a aufweist. Die Messeraufnahme 7 besitzt einen Schwerpunkt 11, der zur Drehachse 10 einen Abstand b aufweist. Die beiden Schwerpunkte 11 und 12 sind einander gegenüberliegend zur Drehachse 10 angeordnet. Aufgrund der beiden in einem Abstand a, b zur Drehachse 10 angeordneten Schwerpunkte 11 und 12 ergibt sich ein Schwerpunkt 13 des Gesamtsystems, der auf der Drehachse 10 liegt. Die in einem Abstand zur Drehachse 10 angeordneten Schwerpunkte 11 und 12 bewirken jeweils eine Unwucht. Die beiden Unwuchten sind entgegengerichtet und so groß, dass sich insgesamt ein ausgewuchtetes Gesamtsystem ergibt. Dabei gleichen sich insbesondere die statischen Unwuchten aus. Eine geringe resultierende dynamische Unwucht kann bestehen bleiben. Die Lage des Schwerpunkts 11 bewirkt, dass im Betrieb auf die Messeraufnahme 7 eine Radialkraft in Richtung des Pfeils 32 wirkt. An dem Messer 8 wirkt eine entgegengesetzt gerichtete Kraft in Richtung des Pfeils 33. Die durch den Pfeil 33 angedeutete Kraft wird zur Fixierung des Messers 8 an der Messeraufnahme 7 genutzt. Zur zusätzlichen Sicherung des Messers 8 an der Messeraufnahme 7 und zum Ausgleich von Toleranzen besitzt das Messer 8 Erhöhungen, die durch Sicken 30 gebildet sind. Die Sicken 30 ragen in Vertiefungen 31 an der Messeraufnahme 7, so dass das Messer 8 in der in Fig. 2 gezeigten Verriegelungsposition 34 an der Messeraufnahme 7 spielfrei gehalten ist. Dadurch kann eine Geräuschentwicklung im Betrieb aufgrund von Relativbewegungen zwischen dem Messer 8 und der Messeraufnahme 7 vermieden werden.

Fig. 3 zeigt die Gestaltung des Messers 8 im Einzelnen. Wie Fig. 3 zeigt, verläuft die Drehachse 10 in der geometrischen Mitte des Messers 8. Die radial außen liegenden Seitenkanten des Messers 8 besitzen zur Drehachse 10 den gleichen Abstand. Die Drehachse 10 schneidet das Messer 8. Das Messer 8 besitzt zwei Schneiden 15, die bezogen auf die Drehachse 10 einander gegenüberliegend und symmetrisch zur Drehachse 10 angeordnet und ausgebildet sind. Das Messer 8 ist im Wesentlichen rotationssymmetrisch zur Drehachse 10 ausgebildet. Auf einer Seite des Messers 8 ist jedoch eine Zusatzmasse 16 angeordnet, die als verbreiterter Abschnitt des Messers 8 ausgebildet ist. Dadurch wird erreicht, dass der Schwerpunkt 12 den Abstand a zur Drehachse 10 aufweist. Wie Fig. 3 auch zeigt, ist die Messeraufnahme 7 von einer Abdeckung 14 umgeben, die an der in Fig. 1 gezeigten Schutzhaube 3 festgelegt ist. Die Abdeckung 14 schließt das Gehäuse 2 zum Messer 8 hin und vermeidet so eine Verschmutzung des Gehäuseinnenraums.

Fig. 4 zeigt das Messer 8 von der der Messeraufnahme 7 zugewandten Seite. Am Messer 8 sind im mittleren Bereich der Längsseiten Seitenränder 18 angeformt, die in Richtung auf die Messeraufnahme 7 umgebogen sind. Die umgebogenen Seitenränder 18 erhöhen die Stabilität und die Vibrationsfestigkeit des Messers 8. Durch die Seitenränder 18 lässt sich auf einfache Weise eine Erhöhung der Festigkeit des Messers 8 erreichen. An den Seitenrändern 18 sind jeweils zwei Haken 19 ausgebildet, wobei jeweils ein Haken 19 auf jeder Seite der Drehachse 10 angeordnet ist. Das freie Ende des Hakens 19 besitzt jeweils eine Länge e. Die Haken 19 sind zu der der Zusatzmasse 16 zugewandten Seite hin offen. Im Betrieb wirkt die Unwucht, die durch die Zusatzmasse 16 erzeugt wird, in Richtung auf die geschlossene Seite der Haken 19 und bewirkt so eine hohe Haltekraft des Messers 8 an der Messeraufnahme 7. An der der Zusatzmasse 16 gegenüberliegenden Seite der Drehachse 10 ist eine Bohrung 17 vorgesehen, in die zum Auswuchten des Messers 8, beispielsweise nach dem Nachschleifen, ein Wuchtstein eingesetzt werden kann.

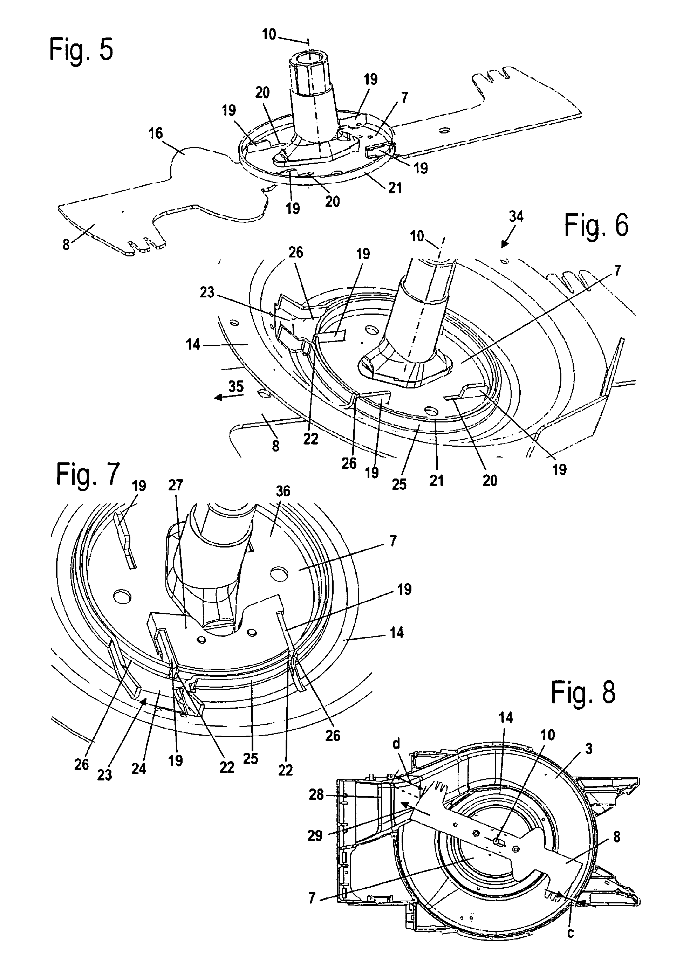

Wie Fig. 5 zeigt, ragen die Haken 19 durch Schlitze 20 in der Haltevorrichtung 7. Die Haltevorrichtung 7 besitzt einen Rand 21, der die in Fig. 6 und Fig. 7 gezeigten Durchbrechungen 22 besitzt.

Wie Fig. 6 zeigt, liegen die Haken 19 in der Verriegelungsposition 34 mit ihrem äußeren Rand im Bereich der Durchbrechungen 22. Die Haken 19 ragen dabei nicht über den Rand 21 radial nach außen. Wie Fig. 6 auch zeigt, besitzt die Abdeckung 14 einen umlaufenden Rand 25, der radial außerhalb und benachbart zum Rand 21 angeordnet ist. Der Rand 25 umgibt den Rand 21. Der Rand 25 besitzt Durchbrechungen 26, die in der in Fig. 6 gezeigten Stellung der Messeraufnahme 7 deckungsgleich zu den Durchbrechungen 22 liegen. In dieser Stellung der Messeraufnahme 7 kann das Messer 8 in Richtung des Pfeils 35 aus der Messeraufnahme 7 gezogen werden. Die Ränder 21 und 25 sind dabei koaxial zur Drehachse 10 angeordnet.

Wie Fig. 6 und 7 zeigen, ist im Bereich einer Durchbrechung 26 eine Aussparung 23 angeordnet, in der eine Verriegelungstaste 24 vorgesehen ist. Die Verriegelungstaste 24 verschließt die Durchbrechung 26 und begrenzt damit eine radiale Bewegung des Messers 8. Zum Lösen des Messers 8 muss deshalb zunächst die Verriegelungstaste 24 vom Bediener gedrückt werden, so dass die Durchbrechung 26 freigegeben ist. Anschließend kann das Messer in Richtung des in Fig. 6 gezeigten Pfeils 35 aus der Messeraufnahme 7 geschoben werden, so dass sich die Haken 19 aus der Messeraufnahme 7 lösen und das Messer 8 nach unten entfernt werden kann. Aufgrund der Anordnung und Ausrichtung der Durchbrechungen 26 ist ein Lösen oder Fixieren des Messers 8 an der Haltevorrichtung 7 nur in dieser Stellung möglich.

Fig. 8 zeigt die Lage des Messers 8 in der in den Fig. 6 und 7 gezeigten Position. Das Messer 8 liegt mit einem Ende in Richtung auf einen Auswurfkanal 28 der Schutzhaube 3 ausgerichtet. Im Bereich des Auswurfkanals 28 besitzt die Schutzhaube 3 in radialer Richtung zur Drehachse 10 einen Abstand d zum Messer 8, der deutlich größer als die Länge e des freien Endes der Haken 19 ist. In dieser Richtung kann das Messer 8 montiert, oder, wie durch den Pfeil 29 angedeutet, von der Messeraufnahme 7 gelöst werden. Auf der gegenüberliegenden Seite besitzt das Messer 8 zur Schutzhaube 3 einen Abstand c, der deutlich kleiner als die Länge e des freien Abschnittes des Hakens 19 ist. In allen anderen Richtungen wird die Bewegung des Messers 8 deshalb von der Schutzhaube 3 begrenzt, bevor das Messer 8 von der Messeraufnahme 7 gelöst werden kann. Die Begrenzung der Bewegung durch die Schutzhaube 3 ist redundant zur Begrenzung durch den Rand 25 mit den Durchbrechungen 26 (Fig. 7) und stellt eine zusätzliche Sicherung bei Versagen des Rands 25 bzw. der Haken 19 dar.

Wie Fig. 7 zeigt, besitzt die Messeraufnahme 7 eine Zusatzmasse 27, die an einer Grundplatte 36 der Messeraufnahme 7 festgelegt ist und die die Schlitze für die Haken 19 teilweise begrenzt. Die Zusatzmasse 27 bildet die Unwucht der Messeraufnahme 7. Die Zusatzmasse 27 erzeugt eine Radialkraft, die die durch die Zusatzmasse 16 des Messers 8 erzeugte Radialkraft ausgleicht.

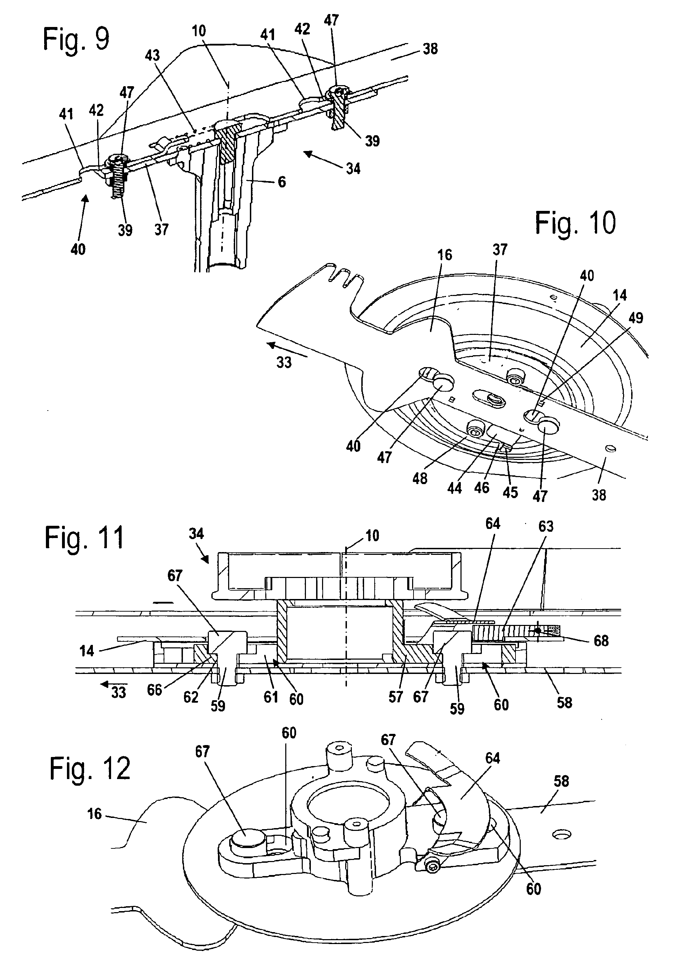

Die Fig. 9 und 10 zeigen ein weiteres Ausführungsbeispiel eines Messers 38, das an einer Messeraufnahme 37 gehalten ist. Wie Fig. 9 zeigt, besitzt das Messer 38 schlüssellochartig ausgebildete Öffnungen 40, in die Haltebolzen 39 der Messeraufnahme 37 ragen. Die Öffnungen 40 besitzen jeweils eine Eintrittsöffnung 41 mit vergrößertem Durchmesser und einen daran anschließenden, in Richtung der Längsmittelachse des Messers 38 verlaufenden Schlitz 42. Die Haltebolzen 39 besitzen jeweils einen Kopf 47, der den Randbereich am Schlitz 42 hintergreift, und so das Messer 38 sichert. Die Messeraufnahme 37 besitzt als zusätzliches Sicherungsmittel eine Feder 43, die als Schraubendruckfeder ausgebildet ist und die das Messer 38 in die in Fig. 9 gezeigte Verriegelungsposition 34 drückt. Dadurch ist auch bei Stillstand der Antriebswelle 6 sichergestellt, dass das Messer 38 an der Messeraufnahme 37 gehalten ist.

Wie Fig. 10 zeigt, besitzt das Messer 38 ebenfalls eine Zusatzmasse 16, die im Betrieb eine Kraft in Richtung des Pfeils 33 ausübt. Dadurch wird das Messer 38 an den Haltebolzen 39 von der Eintrittöffnung 41 weg in den Schlitz 42 gedrückt. Dadurch ist das Messer 38 im Betrieb sicher an der Messeraufnahme 37 gehalten. Um sicherzustellen, dass die Messeraufnahme 37 nicht rotierend angetrieben werden kann, wenn das Messer 38 nicht vollständig montiert ist, besitzt die Messeraufnahme 37 eine Verriegelungstaste 44, die eine Nase 45 besitzt. Die Nase 45 ragt in eine Öffnung 46 an der Abdeckung 14.Die Verriegelungstaste 44 ist gefedert gelagert und drückt gegen das Messer 38. Sobald das Messer 38 gegen die Verriegelungstaste 44 drückt, wird die Nase 45 in die Ebene der Abdeckung 14 bewegt und verhindert so eine Drehbewegung der Messeraufnahme 37. Am Messer 38 ist eine Aussparung 49 vorgesehen, in die ein in Fig. 10 nicht gezeigter Vorsprung in der Verriegelungsposition 34 ragt. Sobald der Vorsprung in der Aussparung 49 zu liegen kommt, federt die Verriegelungstaste 44 zurück und bewegt die Nase 45 aus der Öffnung 46. Die Öffnung 46 ist dabei in einem Rand 48 der Abdeckung 14 angeordnet, der die Messeraufnahme 37 konzentrisch zur Drehachse 10 umgibt. Bei vollständig montiertem Messer 38 wird die Nase 45 nicht vom Rand 48 blockiert, und die Messeraufnahme 37 kann rotierend angetrieben werden. Die Verriegelungstaste 44 verhindert damit eine Drehbewegung der Messeraufnahme 37, wenn das Messer 38 nicht korrekt in der Verriegelungsposition 34 angeordnet ist. Bei nicht montiertem Messer 38 ist die Messeraufnahme 37 drehbar.

Bei dem in Fig. 11 gezeigten Ausführungsbeispiel ist ein Messer 58 vorgesehen, das an einer Messeraufnahme 57 gehalten ist. Das Messer 58 besitzt ebenfalls eine in Fig. 11 nicht gezeigte Unwucht, die in Richtung des Pfeils 33 wirkt. Das Messer 58 besitzt zwei Haltebolzen 59, die jeweils einen Kopf 67 mit vergrößertem Durchmesser besitzen. An der Messeraufnahme 57 sind zwei Öffnungen 60 ausgebildet, die jeweils schlüssellochförmig ausgebildet sind und die eine Eintrittsöffnung 61 besitzen, durch die der Kopf 67 hindurchtreten kann, sowie einen in Längsrichtung des Messers 58 verlaufenden, schmaleren Schlitz 62, der an die Eintrittsöffnung 61 anschließt. Der Schlitz 62 besitzt einen Rand 66, der den Kopf 67 der Haltebolzen 59 in der in Fig. 11 gezeigten Verriegelungsposition 34 hintergreift. Zur zusätzlichen Sicherung ist ein Halteriegel 63 an der Haltevorrichtung 57 vorgesehen, der um eine Schwenkachse 68 schwenkbar gelagert ist. Der Halteriegel 63 ragt in den Bereich der Eintrittsöffnung 61 der Öffnung 60 und blockiert diese, so dass der Haltebolzen 59 nicht in den Bereich der Eintrittsöffnung 61 gelangen kann. Dadurch ist ein unbeabsichtigtes Lösen des Messers 58 vermieden.

Der Halteriegel 63 ist von einem Sicherungsblech 64 abgedeckt. Das Sicherungsblech 64 überdeckt einen vorgegebenen Winkelbereich, der der Ausbauposition des Messers 58 entspricht. Dadurch wird vermieden, dass der Halteriegel in diesen Winkelbereich aufschwenkt und das Messer selbsttätig ausfallen kann. Zum Lösen des Messers 58 von der Messeraufnahme 57 muss zunächst der Halteriegel 68 nach außen schwenken. Zum Ausbau des Messers 58 wird das Arbeitsgerät, also der Rasenmäher 1, üblicherweise gedreht. Beim Umdrehen des Rasenmähers 1 fällt der Halteriegel 58 nach außen, wenn er nicht in einem von dem Sicherungsblech 64 abgedeckten Bereich angeordnet ist. Zum Lösen des Messers 58 muss der Bediener das Messer 58 dann nur noch in die Ausbauposition drehen und seitlich verschieben, so dass die Haltebolzen 59 durch die Öffnungen 60 geführt werden können. Sollte der Halteriegel 63 beim Kippen des Arbeitsgeräts im Bereich des Sicherungsblechs 64 angeordnet sein, muss der Bediener die Messeraufnahme 57 zunächst manuell drehen, bis der Halteriegel 63 aus dem Bereich des Sicherungsblechs 64 gelangt und nach außen fällt. Anschließend muss die Messeraufnahme 57 so zurückgedreht werden, dass das Messer 58 in Ausbauposition ist und seitlich bewegt werden kann.

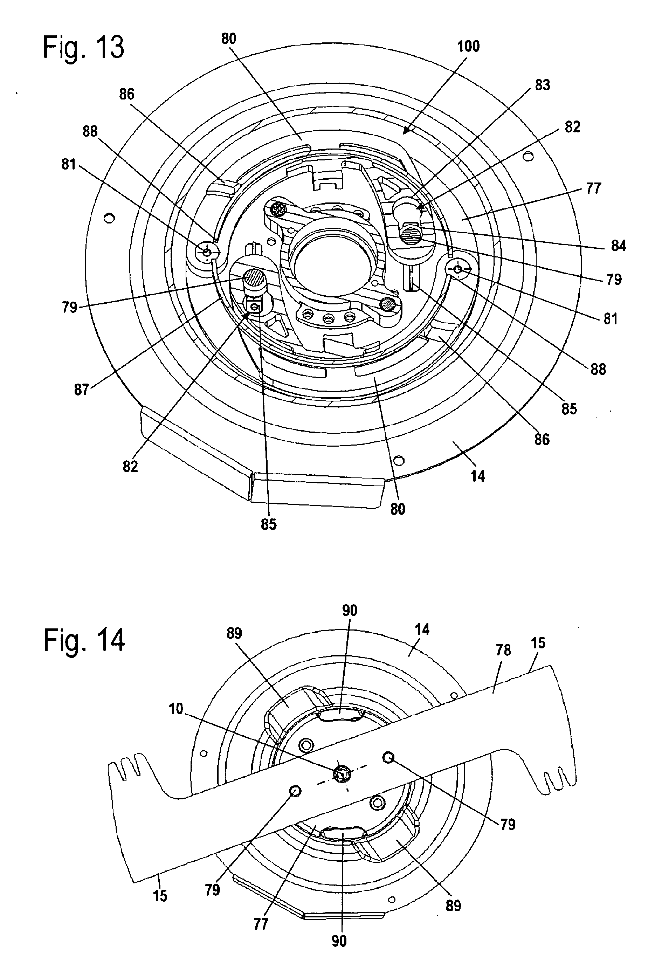

Die Fig. 13 bis 20 zeigen eine Messeraufnahme 77, an der ein Messer 78 (Fig. 14) lösbar gehalten ist. Wie Fig. 14 zeigt, besitzt das Messer 78 keine Zusatzmasse. Das Messer 78 ist um die Drehachse 10 ausgewuchtet. Das Messer 78 besitzt zwei einander bezogen auf die Drehachse 10 gegenüberliegend angeordnete Schneiden 15. Am Messer 78 sind zwei Haltebolzen 79 beidseitig zur Drehachse 10 festgelegt, die zur Messeraufnahme 77 ragen. Die Messeraufnahme 77 ist von einer Abdeckung 14 umgeben. Benachbart zur Messeraufnahme 77 besitzt die Abdeckung 14 zwei einander gegenüberliegend angeordnete Griffmulden 89. Die Messeraufnahme 77 besitzt zwei Entriegelungsabschnitte 90, die ebenfalls einander gegenüberliegend angeordnet sind. Die Entriegelungsabschnitte 90 sind als Bedienabschnitte ausgebildet und werden zum Entriegeln von einem Bediener betätigt. In der in Fig. 14 gezeigten Stellung des Messers 78 können die Entriegelungsabschnitte 90 vom Bediener nicht betätigt werden, da sie nicht in Überdeckung mit den Griffmulden 89 liegen. Eine Betätigung der Entriegelungsabschnitte 90 ist durch die Abdeckung 14, die sich radial außerhalb der Messeraufnahme 77 und der Entriegelungsabschnitte 90 erstreckt, verhindert.

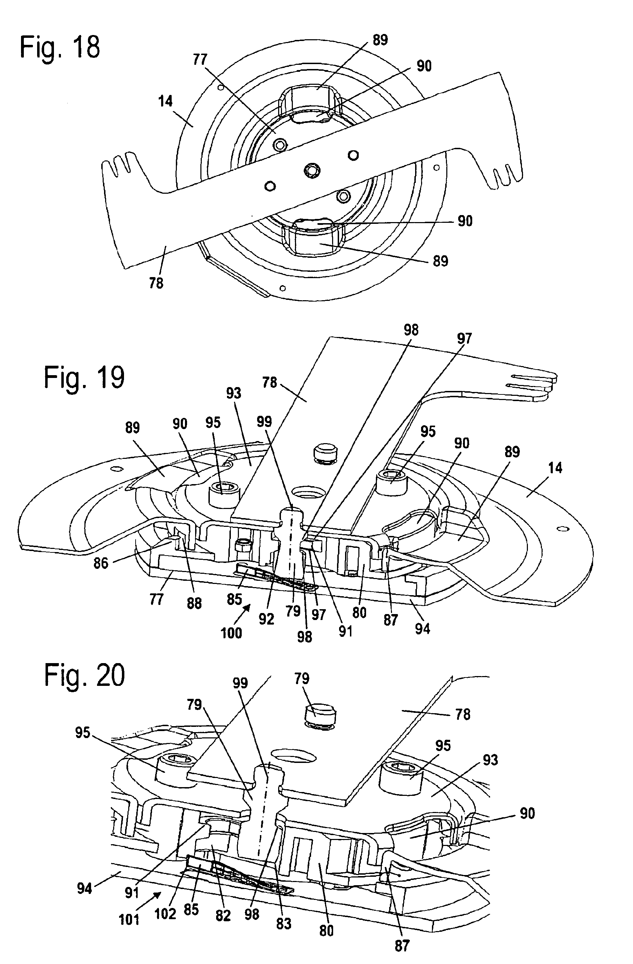

Fig. 13 zeigt eine Ansicht auf die Messeraufnahme 77 von der dem Messer 78 zugewandten Seite. Die Messeraufnahme 77 umfasst zwei Fliehkraftklinken 80, die jeweils um eine Schwenkachse 81 schwenkbar gelagert sind. Beide Fliehkraftklinken 80 erstrecken sich etwa halbkreisförmig im Bereich eines Rands 87, der an der Abdeckung 14 angeformt ist. Die Anordnung des Rands 87 an der Abdeckung 14 ist in den Fig. 19 und 20 dargestellt. Wie Fig. 13 zeigt, besitzt jede Fliehkraftklinke 80 im Bereich ihres freien Endes eine Öffnung 82, die schlüssellochförmig ausgebildet ist und die eine Eintrittsöffnung 83 sowie einen an die Eintrittsöffnung 83 anschließenden Schlitz 84 besitzt. Der Schlitz 84 erstreckt sich dabei von der Eintrittsöffnung 83 zum freien Ende der Fliehkraftklinke 80 hin. In den Öffnungen 82 sind die Haltebolzen 79 des Messers 78 gehalten. Im Bereich des freien Endes jeder Fliehkraftklinke 80 ist eine Feder 85 an der Messeraufnahme 77 angeordnet, deren Funktion im Folgenden noch näher erläutert wird. Die Fliehkraftklinken 80 besitzen jeweils einen Verriegelungsvorsprung 86, der in der in Fig. 13 gezeigten Verriegelungsstellung 100 der Fliehkraftklinken 80 bezogen auf die Drehachse 10 radial außerhalb des Rands 87 liegt. In der in Fig. 13 gezeigten Stellung ist eine Schwenkbewegung der Fliehkraftklinken 80 nach innen durch den Rand 87 vermieden, da die Verriegelungsvorsprünge 86 durch den Rand 87 blockiert sind und an der Schwenkbewegung gehindert werden. Die Haltebolzen 79 des Messers 78 können nicht freigegeben werden, so dass das Messer 78 sicher an der Messeraufnahme 77 gehalten ist.

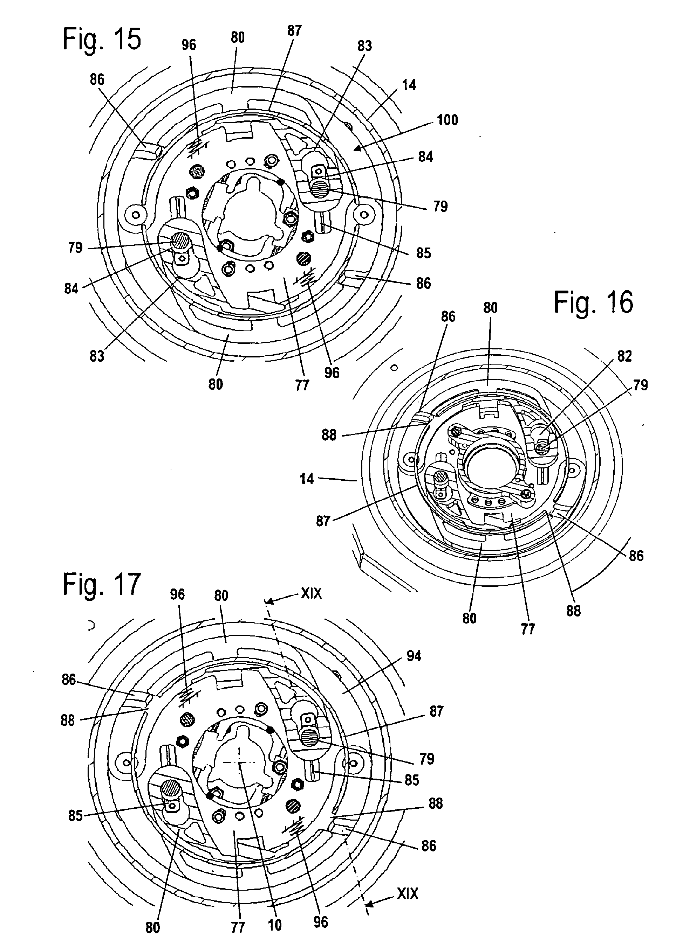

Wie Fig. 15 schematisch zeigt, sind die Fliehkraftklinken 80 durch Federn 96 radial nach außen, also in Richtung auf ihre Verriegelungsstellung 100 federbelastet. Die Haltebolzen 79 sind in der Verriegelungsstellung 100 im Bereich der Schlitze 84 angeordnet und hintergreifen die Schlitze 84, so dass das Messer 78 in Richtung der Drehachse 10 an der Messeraufnahme 77 fixiert ist.

Zum Lösen des Messers 78 muss das Messer 78 mit der Messeraufnahme 77 in die in den Fig. 16 bis 18 gezeigte Position gedreht werden. Wie die Fig. 16 und 17 zeigen, besitzt der Rand 87 zwei Durchbrüche 88, deren Breite etwa der Breite der Verriegelungsvorsprünge 86, jeweils in Umfangsrichtung zur Drehachse 10 gemessen, entspricht. In der in den Fig. 16 bis 18 gezeigten Stellung liegen die Verriegelungsvorsprünge 86 radial außerhalb der Durchbrüche 88. Wie Fig. 18 zeigt, sind die Griffmulden 89 in dieser Stellung deckungsgleich zu den Entriegelungsabschnitten 90 angeordnet. Der Bediener kann die Entriegelungsabschnitte 90 durch Greifen im Bereich der Griffmulden 89 betätigen. Die Entriegelungsabschnitte 90 sind mit den Fliehkraftklinken 80 fest verbunden. Durch Drücken der Entriegelungsabschnitte 90 werden die Fliehkraftklinken 80 radial nach innen verschwenkt. Dabei treten die Verriegelungsvorsprünge 86 in die Durchbrüche 88 ein. Die Öffnungen 82 an den Fliehkraftklinken 80 bewegen sich relativ zu den Haltebolzen 79, so dass die Haltebolzen 79 in den Bereich der Eintrittsöffnungen 83 gelangen. Der Bediener muss die Entriegelungsabschnitte 90 dabei entgegen der Kraft der Federn 96 betätigen.

Fig. 19 zeigt die Messeraufnahme 77 vor dem Betätigen der Entriegelungsabschnitte 90. Der Verriegelungsvorsprung 86 liegt vor dem Durchbruch 88 und radial außerhalb des Rands 87. Wie Fig. 19 auch zeigt, ist die Messeraufnahme 77 durch eine dem Messer 78 zugewandte Abdeckplatte 93 und eine Grundplatte 94 gebildet, zwischen denen die Fliehkraftklinken 80 angeordnet sind. Die Haltebolzen 79 ragen in den zwischen den beiden Platten 93 und 94 gebildeten Zwischenraum. Die Platten 93, 94 sind über Befestigungsschrauben 95 von der dem Messer 78 zugewandten Seite miteinander verschraubt. In der in Fig. 19 gezeigten Stellung wird die Feder 85 von dem Haltebolzen 79 nach unten gedrückt.

Wie Fig. 19 zeigt, ist die Feder 85 an der Grundplatte 94 im Bereich der Öffnung 82 festgelegt. Die Öffnung 82 besitzt im Bereich des Schlitzes 84 einen Rand 91, der an seinen quer zur Längsmittelachse 99 des Haltebolzens 79 liegenden Wänden 97 schräg ausgebildet ist. Die Wände 97 laufen dabei in Richtung auf die Mitte des Schlitzes 84 aufeinander zu. Wie Fig. 19 zeigt, besitzt der Haltebolzen 79 eine Vertiefung 92, die vorteilhaft als umlaufende Nut ausgebildet ist, und deren quer zur Längsmittelachse 99 liegende Wände 98 ebenfalls schräg zur Längsmittelachse 99 angeordnet sind, und zwar in einem Winkel, der etwa dem Neigungswinkel der Wand 97 am Rand 91 des Schlitzes 84 entspricht. Aufgrund der Schrägstellung der Wände 97 und 98 ist der Haltebolzen 79 spielfrei in dem Schlitz 84 gehalten. Es kann auch vorgesehen sein, dass das Messer 78 aufgrund der Schrägstellung der Wände 97 und 98 gegen die Abdeckplatte 93 verspannt wird. Der Winkel, um den die Wände 97 und 98 geneigt sind, ist dabei größer als der Winkel für die Selbsthemmung.

Fig. 20 zeigt die Messeraufnahme 77 in Freigabestellung 101. In dieser Stellung sind die Entriegelungsabschnitte 90 eingedrückt und die Fliehkraftklinken 80 nach innen geschwenkt. Die Haltebolzen 79 befinden sich im Bereich der Eintrittsöffnung 83 der Öffnung 82. Die Feder 85 ist von der Abdeckplatte 94 abgehoben und hat den Haltebolzen 79 von der Messeraufnahme 77 weg nach außen bewegt. Das freie Ende 102 der Feder 85 ist am Rand der Öffnung 82 eingerastet und hält die Fliehkraftklinken 80 jeweils in ihrer Freigabestellung 101. Durch Drücken eines Messers 78 mit Haltebolzen 79 in die Öffnungen 82 wird die Feder 85 nach unten gedrückt und gibt die Fliehkraftklinken 80 frei. Aufgrund der Kraft der in Fig. 15 und 17 gezeigten Federn 96 werden die Fliehkraftklinken 80 nach außen gedrückt, so dass das Messer 78 durch die Fliehkraftklinken 80 fixiert wird. Dadurch ergibt sich eine sehr einfache Bedienung der Messeraufnahme 77. Zum Fixieren des Messers 78 muss das Messer 78 lediglich in die Öffnungen 82 gedrückt werden. Zum Lösen des Messers 78 müssen die Entriegelungsabschnitte 90 mit den Griffmulden 89 in Überdeckung gebracht und die Entriegelungsabschnitte 90 gedrückt werden. Das Messer 78 wird dann von den Federn 85 ausgeworfen.

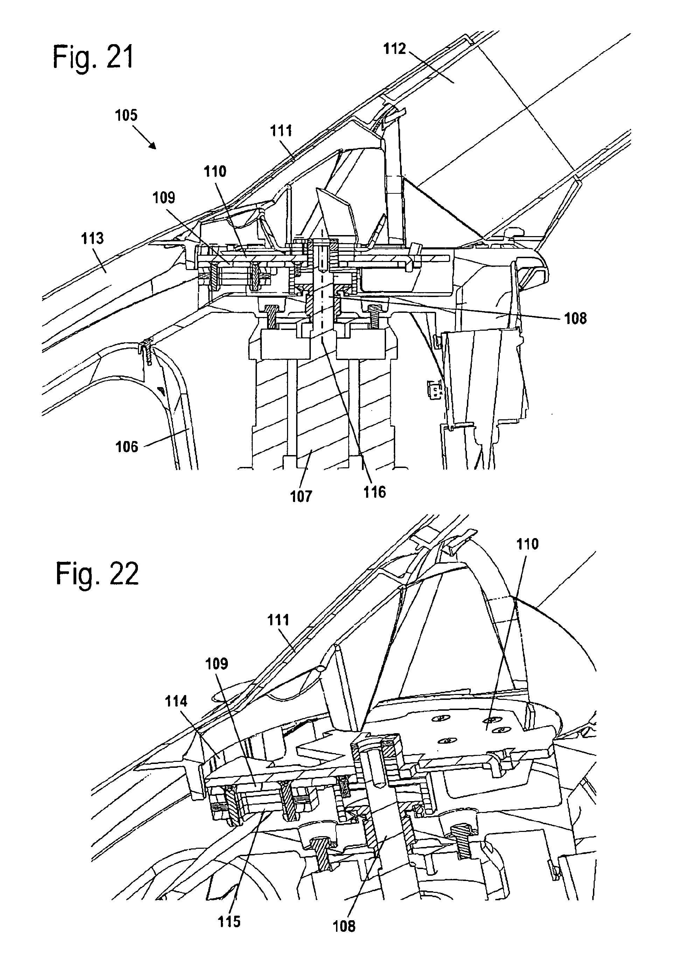

Die Figuren 21 bis 31 zeigen als Ausführungsbeispiel für ein Arbeitsgerät einen Häcksler 105. Der Häcksler 105 besitzt ein Gehäuse 106, in dem ein Antriebsmotor 107 angeordnet ist. Der Antriebsmotor 107 ist als Elektromotor ausgebildet und treibt eine Antriebswelle 108 um eine Drehachse 116 rotierend an. An der Antriebswelle 108 ist eine Messeraufnahme 109 drehfest fixiert. Die Messeraufnahme 109 dient zur Aufnahme einer Messerscheibe 110. Oberhalb der Messerscheibe 110 mündet ein Zuführkanal 112 für Häckselgut. Die Messerscheibe 110 ist von einer Schutzhaube 111 des Gehäuses 106 abgedeckt. Unterhalb der Messerscheibe 110 ist ein Auswurfkanal 113 zum Auswerfen von Schnittgut vorgesehen.

Wie Fig. 22 zeigt, besitzt die Schutzhaube 111 einen Rand 114, der die Messerscheibe 110 bei korrekt montierter Messerscheibe 110 an ihrem Außenumfang in geringem radialen Abstand übergreift. Wie Fig. 22 auch zeigt, ist an der Messeraufnahme 109 auf der der Messerscheibe 110 abgewandten Unterseite eine Zusatzmasse 115 fixiert.

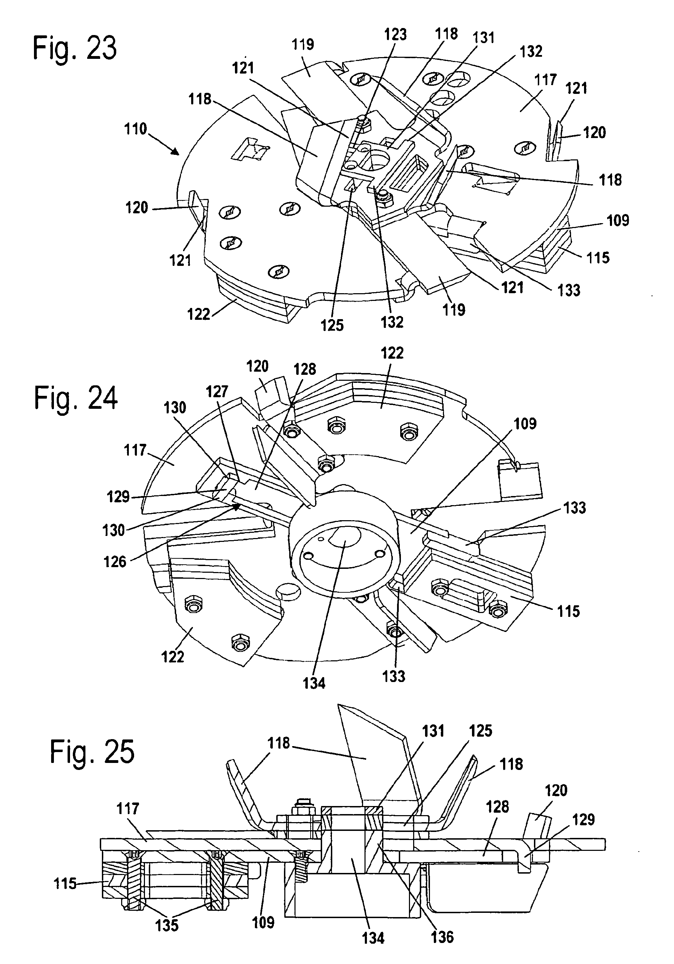

Die Figuren 23 bis 27 zeigen den Aufbau der Messerscheibe 110 und der Messeraufnahme 109 im Einzelnen. Die Messerscheibe 110 besitzt einen Messerträger 117, der als im Wesentlichen ebene Platte ausgebildet ist. An dem Messerträger 117 sind jeweils einander gegenüberliegend zwei Häckselmesser 118, zwei Schnitzelmesser 119 und zwei Reißmesser 120 vorgesehen. Jedes der Messer 118, 119, 120 besitzt eine Schneide 121.

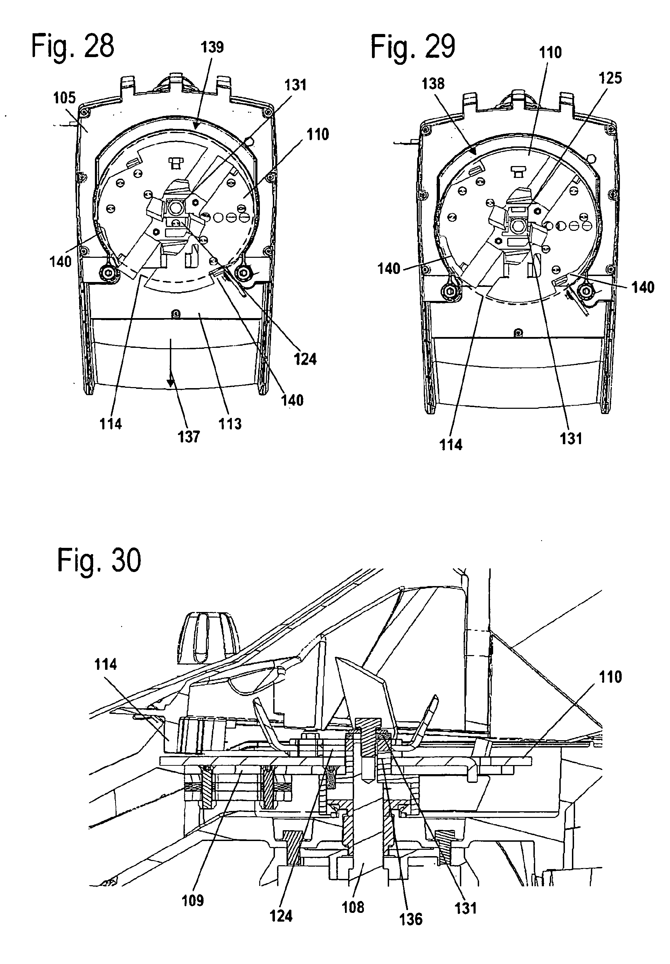

Wie Fig. 23 zeigt, besitzt die Messerscheibe 110 eine Öffnung 123, die im Messerträger 117 vorgesehen ist. Die Öffnung 123 umfasst einen Schlitz 124, der an eine Eintrittsöffnung 125 anschließt. Der Schlitz 124 ist in Fig. 28 gezeigt und in den Figuren 23 bis 27 von einem Stutzen 136 der Messeraufnahme 109 verdeckt.

Wie Fig. 24 zeigt, sind an der der Messeraufnahme 109 zugewandten Unterseite der Messerscheibe 110 zwei Zusatzmassen 122 an der Messerscheibe 110 angebracht. Die beiden Zusatzmassen 122 erzeugen im Betrieb eine statische Unwucht, die entgegengesetzt und gleich groß zu der durch die Zusatzmasse 115 an der Messeraufnahme 109 hervorgerufenen Unwucht ist. Das Gesamtsystem besitzt damit keine statische Unwucht mehr. Vorteilhaft gleichen sich auch die durch die Zusatzmassen 115, 122 hervorgerufenen, dynamischen Unwuchten im Wesentlichen aus. Die beiden Zusatzmassen 122 führen dazu, dass der Schwerpunkt der Messerscheibe 110 einen Abstand zur Drehachse 116 besitzt. Der Schwerpunkt der Messeraufnahme 109 liegt durch die Anordnung der Zusatzmasse 115 auf der gegenüberliegenden Seite der Drehachse 116 und ebenfalls in einem Abstand zur Drehachse 116.

Wie Fig. 24 zeigt, besitzt die Messeraufnahme 109 eine Öffnung 126, die einen Schlitz 127 und eine Eintrittsöffnung 128 umfasst. Mit der Öffnung 126 wirkt eine Lasche 129 der Messerscheibe 110 zusammen. Die Lasche 129 ist aus der Ebene des Messerträgers 117 heraus nach unten gebogen. In der in Fig. 24 gezeigten Verriegelungsposition der Messerscheibe 110 hintergreifen seitliche Abschnitte 130 der T-förmig ausgebildeten Lasche 129 die seitlichen Ränder des Schlitzes 127 und fixieren die Messerscheibe 110 so in Richtung der Drehachse 116. Wie Fig. 24 auch zeigt, besitzt die Messerscheibe 110 seitlich der Zusatzmasse 115 zwei Haken 133, die einen Abschnitt der Messeraufnahme 109 untergreifen und so ebenfalls eine Fixierung der Messerscheibe 110 bewirken. Jeder Haken 133 ist dabei in der Richtung geschlossen, in der die Eintrittsöffnung 128 bezogen auf den Schlitz 127 liegt. Dadurch kann die Messerscheibe 110 gegenüber der Messeraufnahme 109 radial zur Drehachse 116 zum Lösen verschoben werden.

Wie Fig. 25 zeigt, ist die Zusatzmasse 115 aus mehreren Blechen aufgebaut, die mit zwei Befestigungsschrauben 135 an der Messeraufnahme 109 verschraubt sind. Wie Fig. 25 auch zeigt, besitzt die Messeraufnahme 109 eine Aufnahme 134 für die Antriebswelle 108, die im Bereich des Stutzens 136 ausgebildet ist. Wie Fig. 24 zeigt, besitzt die Aufnahme 134 eine Abflachung, so dass die Messeraufnahme 109 drehfest auf der Antriebswelle 108 gehalten ist. Auf dem Stutzen 136 ist die Messerscheibe 110 angeordnet. An dem auf der dem Antriebsmotor 107 abgewandten Oberseite angeordneten Ende des Stutzens 136 ist eine Halteplatte 131 vorgesehen.

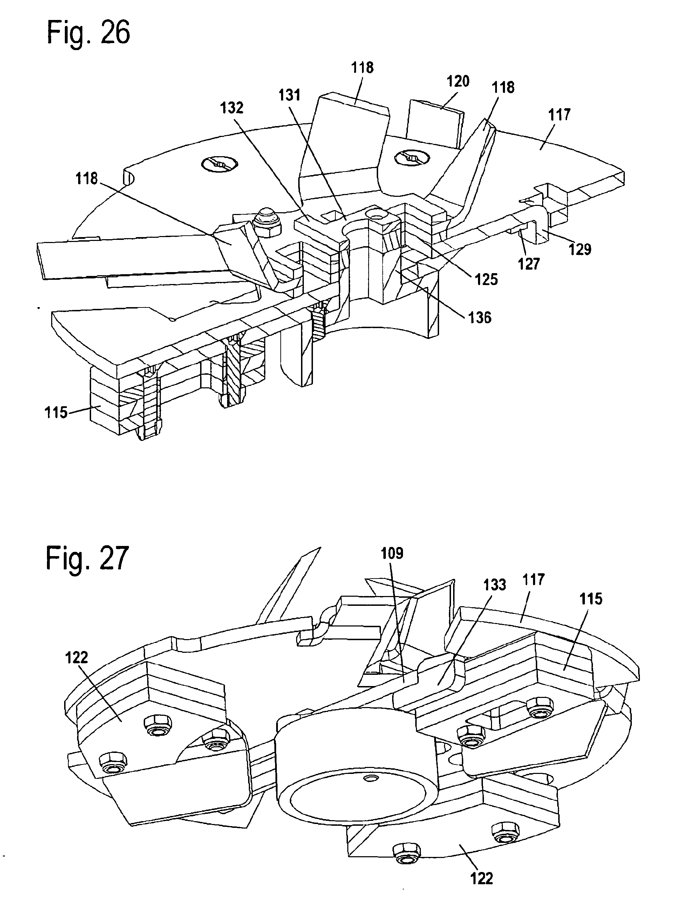

Wie Fig. 26 zeigt, ist die Halteplatte 131 T-förmig ausgebildet und besitzt seitliche Abschnitte 132. Die Eintrittsöffnung 125 der Öffnung 123 im Messerträger 117 besitzt ebenfalls eine T-Form, die der der Halteplatte 131 entspricht. Ist die Messerscheibe 110 an der Messeraufnahme 109 fixiert, so hintergreifen die seitlichen Abschnitte 132 die Seitenränder des Schlitzes 124 und fixieren die Messerscheibe 110 dadurch gemeinsam mit den seitlichen Abschnitten 130.

Fig. 28 zeigt die Messerscheibe 110 in Ausbauposition 139. In dieser Position ist die Messerscheibe in Richtung des Pfeils 137 gegenüber der Messeraufnahme 109 verschoben. Die Halteplatte 131 liegt deckungsgleich zur Eintrittsöffnung 125. Der Stutzen 136 (Fig. 26) ist aus dem Schlitz 124 ausgetreten. Wie Fig. 28 schematisch zeigt, liegt der Rand 114 der Schutzhaube 111 in dieser Position der Messerscheibe 110 im Bereich der Messerscheibe 110. Dadurch kann die Schutzhaube 111 nicht geschlossen werden.

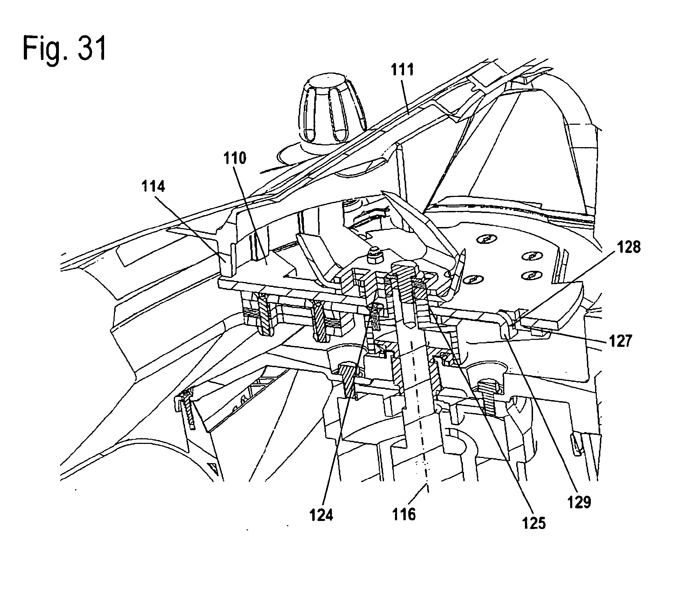

Wie Fig. 30 zeigt, ist in dieser Stellung der Messerscheibe 110 der Schlitz 124 frei und der Stutzen 136 ist in der Eintrittsöffnung 125 angeordnet (Fig. 31). Auch die Lasche 129 ist im Bereich der Eintrittsöffnung 128 angeordnet, so dass der Schlitz 127 frei ist. In dieser Stellung kann die Messerscheibe 110 von der Messeraufnahme 109 in axialer Richtung zur Drehachse 116 abgenommen werden. Aufgrund der Gestaltung des Rands 114 kann die Schutzhaube 111 in dieser Stellung nicht geschlossen werden. Üblicherweise ist bei Häckslern oder dgl. der Betrieb nicht möglich, wenn nicht die Schutzhaube 111 geschlossen ist. Dadurch, dass die Schutzhaube 111 nur bei korrekt montierter Messerscheibe 110 geschlossen werden kann, ist sichergestellt, dass ein Betrieb bei nicht korrekt montierter Messerscheibe 110 nicht möglich ist.

In Fig. 29 ist die Messerscheibe 110 in Verriegelungsposition 138, also in korrekt montiertem Zustand, gezeigt. In dieser Stellung ist der Rand 114 am Außenumfang der Messerscheibe 110 angeordnet, so dass die Schutzhaube 111 geschlossen werden kann. In dieser Stellung hintergreift die Halteplatte 131 den Schlitz 124. Die Haken 133 hintergreifen die Messeraufnahme 109 und die Lasche 129 hintergreift den Schlitz 127. In dieser Stellung ist die Messerscheibe 110 dadurch in axialer Richtung an der Messeraufnahme 109 fixiert.

Die Zusatzmassen 122 sind so angeordnet, dass sie im Betrieb, also bei einer Drehung um die Drehachse 116, eine Kraft auf die Messerscheibe 110 in Richtung auf die Verriegelungsposition 138 ausüben. Die Messerscheibe 110 wird dadurch im Betrieb in die verriegelte Stellung gedrückt, so dass ein unbeabsichtigtes Lösen nicht möglich ist. Durch die aufgrund der Zusatzmassen 122 entstehende Kraft ist die Messerscheibe 110 so an der Messeraufnahme 109 gehalten.

Wie die Figuren 28 und 29 zeigen, sind an der Messerscheibe 110 Aussparungen 140 vorgesehen, die ermöglichen, dass die Messerscheibe 110 zum Ausbau radial zur Drehachse 116 bewegt werden kann. Die Messerscheibe 110 kann in der in Fig. 28 gezeigten Position in Richtung auf den Auswurfkanal 113 verschoben werden. Ein Ausbau der Messerscheibe 110 ist dadurch nur in dieser vorgegebenen Position möglich. In anderen Positionen der Messerscheibe 110 wird die Bewegung der Messerscheibe 110 vom Gehäuse 106 begrenzt. Im Betrieb wird eine radiale Bewegung der Messerscheibe 110 von der Schutzhaube 111 begrenzt.

## Patentansprüche

1. Arbeitsgerät, insbesondere Rasenmäher, Häcksler, Blasgerät oder dgl., mit einem Antriebsmotor (5, 107) und mit einem rotierend angetriebenen Bauteil, wobei das Bauteil um eine Drehachse (10, 116) rotierend angetrieben ist, wobei das Bauteil an einer Haltevorrichtung an dem Arbeitsgerät lösbar gehalten ist, und wobei das Bauteil im Betrieb aufgrund von Fliehkräften an der Haltevorrichtung gehalten ist,
**dadurch gekennzeichnet, dass** das Bauteil sich in den Bereich der Drehachse (10, 116) erstreckt, und dass die Drehachse (10, 116) etwa durch die Mitte des Bauteils verläuft.

2. Arbeitsgerät nach Anspruch 1,
**dadurch gekennzeichnet, dass** das Arbeitsgerät Mittel aufweist, die ein Lösen des Bauteils von der Haltevorrichtung nur in einer definierten Lage des Bauteils erlauben.

3. Arbeitsgerät nach Anspruch 1 oder 2,
**dadurch gekennzeichnet, dass** das Bauteil durch mindestens ein Halteelement an der Haltevorrichtung gehalten ist, das mit einem zugeordneten Gegenelement zusammenwirkt, wobei das Halteelement insbesondere in eine zugeordnete Öffnung (40, 60, 82, 123, 126) ragt.

4. Arbeitsgerät nach Anspruch 3,
**dadurch gekennzeichnet, dass** die Öffnung (40, 60, 82, 123, 126) eine Eintrittsöffnung (41, 61, 83, 125, 128) und einen Schlitz (42, 62, 84) aufweist, wobei das Halteelement den Schlitz (42, 62, 84, 124, 127) in montiertem Zustand des Bauteils hintergreift.

5. Arbeitsgerät nach Anspruch 4,
**dadurch gekennzeichnet, dass** das Halteelement ein Haltebolzen (79) ist, der eine schräg zu seiner Längsmittelachse (99) verlaufende Wand (98) besitzt, die in montiertem Zustand des Bauteils hinter einer entsprechend geneigten Wand (97) des Schlitzes (84) liegt.

6. Arbeitsgerät nach einem der Ansprüche 3 bis 5,
**dadurch gekennzeichnet, dass** das Bauteil durch mindestens einen Haken (19, 133) an der Haltevorrichtung gehalten ist, wobei der Haken (19) insbesondere als radialer Anschlag wirkt.

7. Arbeitsgerät nach einem der Ansprüche 1 bis 6,
**dadurch gekennzeichnet, dass** das Bauteil im Betrieb aufgrund von Fliehkräften in einer Verriegelungsposition (34, 138) an der Haltevorrichtung gehalten ist.

8. Arbeitsgerät nach Anspruch 7,
**dadurch gekennzeichnet, dass** das Bauteil bezogen auf die Drehachse (10, 116) eine Unwucht aufweist und im Betrieb durch Radialkräfte an der Haltevorrichtung gehalten ist, die durch die Unwucht hervorgerufen werden, wobei der Schwerpunkt (12) des Bauteils zur Drehachse (10) insbesondere einen Abstand (a) aufweist und wobei die Haltevorrichtung insbesondere eine Unwucht aufweist, die der Unwucht des Bauteils entgegengerichtet und gleich groß ist.

9. Arbeitsgerät nach Anspruch 7 oder 8,
**dadurch gekennzeichnet, dass** das Arbeitsgerät Mittel aufweist, die eine Drehung des Bauteils verhindern, wenn sich das Bauteil in einer von der Verriegelungsposition (34) abweichenden Stellung befindet, wobei das Arbeitsgerät insbesondere einen drehfest angeordneten Rand (25, 114) aufweist, und wobei der Rand (25, 114) insbesondere mindestens eine Durchbrechung (26) aufweist, die in einer vorgegebenen Position der Haltevorrichtung ein Lösen des Bauteils von der Haltevorrichtung in einer radialen Richtung zur Drehachse (10, 116) erlaubt, wobei an der Durchbrechung (26) insbesondere mindestens ein Sicherungsmittel angeordnet ist, das die Durchbrechung (26) in unbetätigtem Zustand für das Bauteil blockiert.

10. Arbeitsgerät nach einem der Ansprüche 7 bis 9,
**dadurch gekennzeichnet, dass** das Bauteil in der Verriegelungsposition (34) durch Sicherungsmittel gesichert ist.

11. Arbeitsgerät nach Anspruch 10,
**dadurch gekennzeichnet, dass** die Sicherungsmittel mindestens eine Feder (43) umfassen, die das Bauteil in seine Verriegelungsposition (34) drückt.

12. Arbeitsgerät nach Anspruch 10,
**dadurch gekennzeichnet, dass** die Sicherungsmittel mindestens einen Halteriegel (63) umfassen, der eine radiale Bewegung des Bauteils verhindert.

13. Arbeitsgerät nach Anspruch 10,
**dadurch gekennzeichnet, dass** die Sicherungsmittel Rastmittel umfassen, mit denen das Bauteil in der Verriegelungsposition (34) an der Haltevorrichtung verrastet ist.

14. Arbeitsgerät nach einem der Ansprüche 5 bis 13,
**dadurch gekennzeichnet, dass** das Bauteil mindestens teilweise von einer Schutzhaube (3) abgedeckt ist, die einen Auswurfkanal (28) für Schnittgut aufweist, wobei der radiale Abstand (c, d) des Bauteils zur Schutzhaube (3) insbesondere nur im Bereich des Auswurfkanals (28) größer als der zum Lösen des Bauteils benötigte, radiale Weg ist.

15. Arbeitsgerät nach einem der Ansprüche 1 bis 4,
**dadurch gekennzeichnet, dass** die Haltevorrichtung mindestens ein Verriegelungsmittel aufweist, das das Bauteil im Betrieb aufgrund von Fliehkräften an der Haltevorrichtung fixiert.

16. Arbeitsgerät nach Anspruch 15,
**dadurch gekennzeichnet, dass** ein Verriegelungsmittel eine schwenkbar an der Haltevorrichtung gelagerte Fliehkraftklinke (80) ist, die zwischen einer Verriegelungsstellung (100) und einer Freigabestellung (101) verschwenkbar ist, und dass die Fliehkraftklinke (80) im Betrieb aufgrund der Fliehkraft in der Verriegelungsstellung (100) gehalten ist, wobei die Fliehkraftklinke (80) insbesondere in Richtung auf ihre Verriegelungsstellung (100) gefedert ist, wobei das Arbeitsgerät insbesondere Mittel aufweist, die eine Drehung der Haltevorrichtung blockieren, wenn die Fliehkraftklinke (80) nicht in der Verriegelungsstellung (100) angeordnet ist und wobei die Fliehkraftklinke insbesondere einen Entriegelungsabschnitt (90) zum Verschwenken der Fliehkraftklinke (80) aus der Verriegelungsstellung (100) in die Freigabestellung (101) aufweist, wobei der Entriegelungsabschnitt (90) nur in einer vorgegebenen Position der Haltevorrichtung betätigt werden kann.

17. Arbeitsgerät nach Anspruch 16,
**dadurch gekennzeichnet, dass** die Haltevorrichtung mindestens eine Feder (85) aufweist, die das Bauteil in Freigabestellung (101) von der Haltevorrichtung löst, wobei die Feder (85) insbesondere die Fliehkraftklinke (80) bei nicht montiertem Bauteil in der Freigabestellung (101) hält und wobei das Bauteil insbesondere mindestens einen Haltebolzen (79) aufweist, der in eine Öffnung (82) der Fliehkraftklinke (80) ragt, wobei die Feder (85) am Boden der Öffnung (82) angeordnet und bei montiertem Werkzeug von dem Haltebolzen (79) betätigt ist.

18. Arbeitsgerät nach einem der Ansprüche 1 bis 17,
**dadurch gekennzeichnet, dass** das Bauteil ein Werkzeug, insbesondere ein Messer (8, 38, 58, 78) ist, das mindestens zwei Schneiden (15) aufweist.

## Claims

1. Working machine, in particular a lawnmower, stubble cutter, blower or the like, with a drive motor (5, 107) and with a component driven in rotation, such that the component is driven in rotation about a rotation axle (10, 116), such that the component is held releasably in a holding device on the work device, and such that in operation the component is held on the holding device by centrifugal force, **characterised in that** the component extends in the area of the rotation axle (10, 116) and the rotation axle (10, 116) passes approximately through the middle of the component.

2. Working machine according to claim 1,
**characterised in that** the working machine comprises means which only allow the component to be released from the holding device when the component is in a defined position.

3. Working machine according to claims 1 or 2,
**characterised in that** the component is held on the holding device by at least one holding element which co-operates with an associated counter-element, such that in particular the holding element projects into an associated opening (40, 60, 82, 123, 126).

4. Working machine according to claim 3,
**characterised in that** the said opening (40, 60, 82, 123, 126) has an inlet aperture (41, 61, 83, 125, 128) and a slot (42, 62, 84, 124, 127), such that the holding element engages behind the slot (42, 62, 84, 124, 127) when the component is in its assembled condition.

5. Working machine according to claim 4,
**characterised in that** the holding element is a holding bolt (79) having a wall (98) that extends obliquely relative to its longitudinal central axis (99), which in the assembled condition of the component is located behind a corresponding inclined wall (97) of the slot (84).

6. Working machine according to any of claims 3 to 5,
**characterised in that** the component is held on the holding device by at least one hook (19, 133), and the hook (19) acts in particular as a radial abutment.

7. Working machine according to any of claims 1 to 6,
**characterised in that** in operation the component is held on the holding device in a locked position (34, 138) by virtue of centrifugal forces.

8. Working machine according to claim 7,
**characterised in that** relative to the rotation axle (10, 116) the component is out-of-balance and, in particular, it is held on the holding device by radial forces caused by the said imbalance, such that in particular the centre of gravity (12) of the component is a distance (a) away from the rotation axle (10) and such that the holding device has in particular an imbalance directed oppositely to the imbalance of the component but of the same magnitude.

9. Working machine according to claims 7 or 8,
**characterised in that** the working machine comprises means which prevent rotation of the component when the component is in a position other than its locked position (34), and the working machine comprises in particular a rotationally fixed rim (25, 114) and the rim (25, 114) comprises in particular at least one perforation (26) which allows the component to be released from the holding device in a specific position of the holding device in a radial direction relative to the rotation axle (10, 116), and at the said perforation (26) in particular at least one securing means is arranged, which blocks the perforation (26) for the component in the non-actuated condition.

10. Working machine according to any of claims 7 to 9,
**characterised in that** in the locked position (34) the component is secured by securing means.

11. Working machine according to claim 10,
**characterised in that** the said securing means comprise at least one spring (43), which presses the component into its locked position (34).

12. Working machine according to claim 10,
**characterised in that** the securing means comprise at least one holding bolt (63) which prevents radial movement of the component.

13. Working machine according to claim 10,
**characterised in that** the securing means comprise detent means by which the component is retained in the locked position (34) on the holding device.

14. Working machine according to any of claims 5 to 13,
**characterised in that** the component is at least partially covered by a protective hood (3), which has a discharge channel (28) for the cut material, such that the radial distance (c, d) of the component to the protective hood (3), in particular only in the area of the discharge channel (28), is larger than the radial path required for releasing the component.

15. Working machine according to any of claims 1 to 4,
**characterised in that** the holding device comprises at least one locking means, which fixes the component on the holding device during operation by virtue of centrifugal forces.

16. Working machine according to claim 15,
**characterised in that** a locking means consists of a centrifugal-force pawl (80) fitted to pivot on the holding device, which can pivot between a locking position (100) and a release position (101) and which, during operation, is held in the locking position (100) by centrifugal forces, the said centrifugal-force pawl (80) being in particular spring-loaded in the direction towards its locking position (100), and the working machine in particular comprising means which block a rotation of the holding device when the centrifugal-force pawl (80) is not in the locking position (100), and such that the centrifugal-force pawl (80) comprises in particular a release section (90) for pivoting the centrifugal-force pawl (80) from the locking position (100) to the release position (101), and the said release section (90) can only be actuated in a specific position of the holding device.

17. Working machine according to claim 16,
**characterised in that** the holding device comprises at least one spring (85), which in the release position (101) releases the component from the holding device, such that when the component is not fitted the spring (85) holds the centrifugal-force pawl (80) in particular in its release position (101) and such that the component in particular comprises at least one holding bolt (79), which projects into an opening (82) of the centrifugal-force pawl (80), the spring (28) being arranged at the bottom of the opening (82) and being actuated by the holding bolt (79) when the tool is fitted.

18. Working machine according to any of claims 1 to 17,
**characterised in that** the component is a tool, in particular a blade (8, 38, 58, 78), which has at least two cutting edges (15).

## Revendications

1. Machine, en particulier tondeuse à gazon, broyeur, souffleur ou machine similaire, avec un moteur d'entraînement (5, 107) et un élément entraîné en rotation, l'élément étant entraîné en rotation sur un axe de rotation (10, 116), l'élément étant fixé de manière amovible à la machine au niveau d'un dispositif de fixation, et l'élément étant fixé au dispositif de fixation, en fonctionnement, grâce aux forces centrifuges, **caractérisée en ce que** ledit élément s'étend dans la zone de l'axe de rotation (10, 116) et **en ce que** l'axe de rotation (10, 116) traverse à peu près le centre de l'élément.

2. Machine selon la revendication 1,
**caractérisée en ce qu'**elle comporte des moyens qui permettent de détacher l'élément du dispositif de fixation seulement dans une position définie dudit élément.

3. Machine selon la revendication 1 ou 2,
**caractérisée en ce que** l'élément est fixé au dispositif de fixation par au moins un élément de fixation qui coopère avec un élément opposé associé, l'élément de fixation dépassant en particulier dans une ouverture associée (40, 60, 82, 123, 126).

4. Machine selon la revendication 3,
**caractérisée en ce que** l'ouverture (40, 60, 82, 123, 126) présente une ouverture d'entrée (41, 61, 83, 125, 128) et une fente (42, 62, 84), l'élément de fixation venant en prise par derrière avec la fente (42, 62, 84, 124, 127) dans la position montée de l'élément.

5. Machine selon la revendication 4,
**caractérisée en ce que** l'élément de fixation est constitué par une tige de fixation (79) qui a une paroi (98) inclinée par rapport à l'axe longitudinal médian (99) de ladite tige (79) et située, dans la position montée de l'élément, derrière une paroi (97), inclinée en conséquence, de la fente (84).

6. Machine selon l'une des revendications 3 à 5,
**caractérisée en ce que** l'élément est fixé au dispositif de fixation par au moins un crochet (19, 133), le crochet (19) agissant en particulier comme une butée radiale.

7. Machine selon l'une des revendications 1 à 6,
**caractérisée en ce que** l'élément, en fonctionnement, est fixé au dispositif de fixation dans une position de verrouillage (34, 138) grâce aux forces centrifuges.

8. Machine selon la revendication 7,
**caractérisée en ce que** l'élément présente un balourd par rapport à l'axe de rotation (10, 116) et est fixé au dispositif de fixation, en fonctionnement, grâce à des forces radiales qui sont provoquées par le balourd, le centre de gravité (12) de l'élément présentant en particulier un écartement (a) par rapport à l'axe de rotation (10), et le dispositif de fixation présentant en particulier un balourd qui est dirigé en sens inverse par rapport au balourd de l'élément et qui est égal à celui-ci.

9. Machine selon la revendication 7 ou 8,
**caractérisée en ce qu'**elle comporte des moyens qui empêchent une rotation de l'élément quand celui-ci se trouve dans une position différente de la position de verrouillage (34), la machine comportant en particulier un bord (25, 114) disposé fixe en rotation, et le bord (25, 114) présentant en particulier une ouverture (26) qui, dans une position prédéfinie du dispositif de fixation, permet de détacher l'élément du dispositif de fixation dans un sens radial par rapport à l'axe de rotation (10, 116), étant précisé qu'il est prévu sur l'ouverture (26) en particulier au moins un moyen de sécurité qui bloque ladite ouverture (26) pour l'élément, en position non actionnée.

10. Machine selon l'une des revendications 7 à 9,
**caractérisée en ce que** l'élément est bloqué dans la position de verrouillage (34) par des moyens de sécurité.

11. Machine selon la revendication 10,
**caractérisée en ce que** les moyens de sécurité comprennent au moins un ressort (43) qui pousse l'élément dans sa position de verrouillage (34).

12. Machine selon la revendication 10,
**caractérisée en ce que** les moyens de sécurité comprennent au moins un verrou d'arrêt (63) qui empêche un mouvement radial de l'élément.

13. Machine selon la revendication 10,
**caractérisée en ce que** les moyens de sécurité comprennent des moyens d'enclenchement avec lesquels l'élément est enclenché sur le dispositif de fixation, dans la position de verrouillage (34).

14. Machine selon l'une des revendications 5 à 13,
**caractérisée en ce que** l'élément est au moins partiellement couvert par un capot de protection (3) qui comporte un conduit d'éjection (28) pour les produits coupés, l'écartement radial (c, d) entre l'élément et le capot (3), en particulier seulement dans la zone du conduit d'éjection (28), étant supérieur à la course radiale nécessaire au détachement de l'élément.

15. Machine selon l'une des revendications 1 à 4,
**caractérisée en ce que** le dispositif de fixation comporte au moins un moyen de verrouillage qui fixe l'élément au dispositif de fixation, en fonctionnement, grâce aux forces centrifuges.

16. Machine selon la revendication 15,
**caractérisée en ce qu'**un moyen de verrouillage est constitué par un cliquet à force centrifuge (80) qui est monté pivotant sur le dispositif de fixation et qui est apte à pivoter entre une position de verrouillage (100) et une position de déblocage (101), et **en ce que** le cliquet à force centrifuge (80), en fonctionnement, est fixé dans la position de verrouillage (100) grâce à la force centrifuge, ledit cliquet (80) étant contraint par ressort en particulier en direction de sa position de verrouillage (100), la machine comportant en particulier des moyens qui bloquent une rotation du dispositif de fixation quand le cliquet (80) n'est pas disposé dans la position de verrouillage (100), et le cliquet (80) comportant en particulier une partie de déverrouillage (90) pour son pivotement de la position de verrouillage (100) vers la position de déblocage (101), la partie de déverrouillage (90) ne pouvant être actionnée que dans une position prédéfinie du dispositif de déblocage.

17. Machine selon la revendication 16,
**caractérisée en ce que** le dispositif de fixation comporte au moins un ressort (85) qui détache l'élément du dispositif de fixation, dans la position de déblocage (101), le ressort (85) maintenant en particulier le cliquet à force centrifuge (80) dans la position de déblocage (101), quand la pièce n'est pas montée, et la pièce comportant en particulier au moins une tige de fixation (79) qui dépasse dans une ouverture (82) du cliquet (80), le ressort (85) étant disposé au fond de l'ouverture (82) et étant actionné par la tige de fixation (79), quand l'outil est monté.

18. Machine selon l'une des revendications 1 à 17,
**caractérisée en ce que** la pièce est constituée par un outil, en particulier une lame (8, 38, 58, 78), qui présente au moins deux tranchants (15).
